# EUROPÄISCHE PATENTSCHRIFT

(11) **EP 0 682 198 B1**
(45) Veröffentlichungstag und Bekanntmachung des Hinweises auf die Patenterteilung: **29.12.1999**
(21) Anmeldenummer: 95106879.0
(22) Anmeldetag: 06.05.1995
(51) Int. Cl.: F16K 1/226

(54) **Absperrklappe**
Butterfly valve
Vanne papillon

(30) Priorität: 12.05.1994 DE 4416741
(43) Veröffentlichungstag der Anmeldung: 15.11.1995
(73) Patentinhaber: Kempchen & Co. GmbH, D-46049 Oberhausen (DE); EISENWERK HEINRICH SCHILLING GmbH & Co., D-33689 Bielefeld (DE)
(72) Erfinder: Hacker, Helmut, D-22455 Hamburg (DE); Tückmantel, Hans Joachim, Dipl. Ing., D-45472 Mülheim (DE); Liermann, Günter, D-33689 Bielefeld (DE); Grote, Anton, D-33659 Bielefeld (DE)
(74) Vertreter: Honke, Manfred, Dr.-Ing.

(56) Entgegenhaltungen:
- DE-A- 4 104 790
- FR-A- 1 255 873
- FR-A- 2 354 498
- GB-A- 2 100 838
- PATENT ABSTRACTS OF JAPAN vol. 9 no. 155 (M-392) [1878] ,29.Juni 1985 & JP-A-60 030872 (KUBOTA TEKKO K.K.) 16.Februar 1986,

## Beschreibung

Die Erfindung betrifft eine Absperrarmatur mit
einem einen Strömungskanal bildenden Gehäuse,
einer Absperrklappe mit umfangsseitiger, kegelförmiger Dichtfläche,
einer quer zum Strömungskanal verlaufenden Absperrklappenwelle, die in bezug auf die Absperrklappe exzentrisch mit einem axialen Versatz zur umfangsseitigen Dichtfläche und mit einem radialen Versatz zur Mittelachse des Strömungskanals angeordnet ist, und
einem Wellfederdichtungsring, der unter axialer Vorspannung in eine Vorspannut eingesetzt ist,
wobei die Vorspannut in dem die Dichtfläche tragenden Rand der Absperrklappe angeordnet ist und wobei der Wellfederdichtungsring bei geschlossener Absperrklappe federnd, Metall auf Metall, mit seiner über der Dichtfläche vorstehenden Paßfläche gegen eine zur Dichtfläche komplementären Gegendichtfläche des Absperrklappensitzes wirkt.

Eine Absperrarmatur des beschriebenen Aufbaus ist aus DE-A 41 04 790 bekannt. Bei der Schließ- und Öffnungsbewegung ist die Dichtfläche praktisch reibungsfrei auf die Gegendichtfläche aufsetzbar bzw. von diese abhebbar. Probleme können auftreten, wenn der Strömungskanal einen sehr großen Durchmesser aufweist und Temperaturdifferenzen des im Strömungskanal geführten Fluids in Kauf genommen werden müssen. Wenn bei relativ zur Absperrklappe kaltem Gehäuse an der geschlossenen Absperrklappe warmes Medium ansteht, besteht die Gefahr, daß sich die Klappe aufgrund der Wärmedehnung an dem Absperrklappensitz verspannt, wobei die Klemmwirkung so groß werden kann, daß die Klappe nicht mehr geöffnet werden kann.

Der Erfindung liegt die Aufgabe zugrunde, eine Absperrarmatur mit dem aus DE-A 41 04 790 bekannten Aufbau so zu verbessern, daß die Absperrarmatur auch dann leichtgängig geöffnet und geschlossen werden kann, wenn infolge instationärer Betriebszustände die Fluidtemperatur großen Schwankungen unterliegt.

Die Aufgabe wird erfindungsgemäß dadurch gelöst, daß der Absperrklappensitz aus einem Hohlkegelring besteht, der eine Wanddicke von einigen Millimetern aufweist, und daß der Hohlkegelring im Bereich seines größten Durchmessers mittelbar oder unmittelbar an das Gehäuse angeschlossen und an seinem anderen Ende mit einem Ringspaltabstand zum Gehäuse angeordnet ist, so daß die Wärmedehnung des Hohlkegelrings im wesentlichen der Wärmedehnung der Absperrklappe entspricht, wenn bei relativ zur Absperrklappe kaltem Gehäuse an der Absperrklappe warmes Medium ansteht. Die Wanddicke des Hohlkegelrings wird um so größer gewählt, je größer der Durchmesser des Strömungskanals ist und je größer die Drücke sind, die es zu beherrschen gilt.

Bei der erfindungsgemäßen Absperrarmatur kann der Hohlkegelring an das Gehäuse angeformt, beispielsweise durch Hinterdrehen ausgeformt sein. Nach bevorzugter Ausführungsform der Erfindung ist jedoch der Hohlkegelring an einen Haltering angeschlossen, der in eine Aufnahmenut eingesetzt ist. Hohlkegelring und Haltering bilden eine Einheit. Die Aufnahmenut ist in das Gehäuse eingedreht. Es empfiehlt sich ferner, bei der erfindungsgemäßen Absperrarmatur die kegelförmige Dichtfläche an der Absperrklappe, dem Hohlkörperring und die Exzentrik so einzurichten, daß bei der Schließ- und Öffnungsbewegung der Absperrklappe die Dichtfläche praktisch reibungsfrei auf die Gegendichtfläche aufsetzt.

Der Wellfederdichtungsring besteht vorzugsweise aus einer Mehrzahl von ebenen metallischen Ringscheiben, zwischen den Ringscheiben angeordneten metallischen Wellringscheiben mit umlaufenden Wellenbergen und Wellentälern und Zwischenlagen aus einem Weichdichtungswerkstoff. Der Wellfederdichtungsring wirkt federnd, Metall auf Metall, mit seiner über der Dichtfläche vorstehenden Paßfläche gegen die Gegendichtfläche. Bei einem Verschleiß kann der Wellfederdichtungsring nachgestellt werden. Dazu ist die Vorspannut mit einer Auskammerung in der Absperrklappe und einem Vorspannring aufgebaut, der mit über den Umfang verteilten Vorspannschrauben gegen den Dichtungsring spannbar und bei Verschleiß nachstellbar ist. Der Wellfederdichtungsring ist zweckmäßigigerweise aus zumindest zwei metallischen Ringscheiben und zumindest zwei Wellringscheiben aufgebaut, zwischen denen der Weichdichtungswerkstoff angeordnet ist, wobei eine Schicht aus dem Weichdichtungswerkstoff außerdem zu einer Anlagefläche der Vorspannut hin vorgesehen ist. Als Weichdichtungswerkstoff wird man im allgemeinen Graphit einsetzen. Die Ringscheiben und die Wellringscheiben bestehen zweckmäßigerweise aus Edelstahl, Blechdicke etwa 0,5 mm.

Die erfindungsgemäße Absperrarmatur zeichnet sich durch dichtungstechnische Funktionssicherheit auch dann aus, wenn Temperaturdifferenzen und daraus resultierende unterschiedliche Wärmedehnungen in Kauf genommen werden müssen. Unterschiedliche Wärmedehnungen treten z. B. auf, wenn bei relativ zur Absperrklappe kaltem Gehäuse an der Absperrklappe relativ warmes Medium ansteht. Außerdem ist stets ein leichtes Schließen und Öffnen der Absperrklappe gewährleistet.

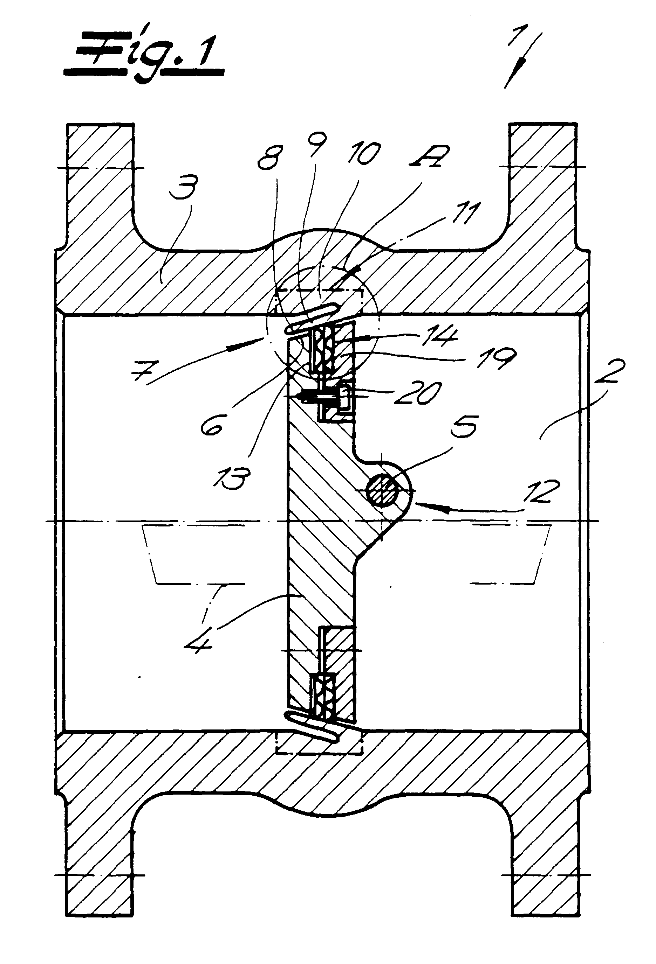

Im folgenden wird die Erfindung anhand einer lediglich ein Ausführungsbeispiel darstellenden Zeichnung ausführlicher erläutert. Es zeigen in schematischer Darstellung
- **Fig. 1**: einen Axialschnitt durch eine erfindungsgemäße Absperrarmatur in Richtung der Achse des Strömungskanals,

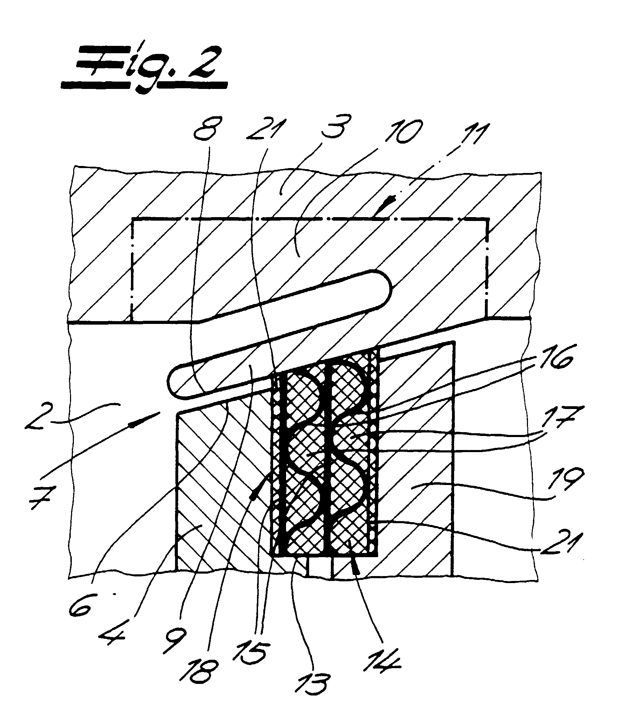

- **Fig.2**: in gegenüber der Fig. 1 wesentlich vergrößertem Maßstab den Ausschnitt A aus dem Gegenstand der Fig. 1.

Die in den Figuren dargestellte Absperrarmatur 1 besitzt ein einen Strömungskanal 2 bildendes Gehäuse 3, eine Absperrklappe 4 mit quer zum Strömungskanal 2 verlaufender, in bezug auf die Absperrklappe 4 exzentrisch angeordneter Absperrklappenwelle 5 und eine Absperrklappenbetätigungseinrichtung, die im einzelnen nicht gezeigt ist. Die Absperrklappe 4 trägt eine kegelförmige Dichtfläche 6. Der Absperrklappensitz 7 besitzt eine komplementäre Gegendichtfläche 8, die an einem federnden Hohlkegelring 9 ausgebildet und im Bereich ihres größten Durchmessers mittelbar oder unmittelbar an das Gehäuse 3 angeschlossen ist. Der Hohlkegelring 9 besitzt eine Wanddicke von einigen Millimetern, wobei das Maß vom Durchmesser des Strömungskanals 2 und den Beanspruchungen abhängig ist. Der Hohlkegelring 9 kann an das Gehäuse 3 angeformt sein, beispielsweise durch Hinterschneiden spanend erzeugt worden sein. Der Hohlkegelring 9 kann aber auch an einen Haltering 10 angeschlossen sein, der in eine Aufnahmenut 11 des Gehäuses 3 eingesetzt ist. Die kegelförmige Dichtfläche 6 an der Absperrklappe 4, der Hohlkegelring 9 und die Exzentrizität 12 sind so eingerichtet, daß bei der Schließ- und Öffnungsbewegung der Absperrklappe 4 die Dichtfläche 6 praktisch reibungsfrei auf die Gegendichtfläche 8 aufsetzbar und der Hohlkegelring 9 beim Aufbringen der Dichtkraft über die Absperrklappenbetätigungseinrichtung nach Maßgabe der Dichtkraft federnd verformbar ist.

Das Ausführungsbeispiel zeigt eine bevorzugte Ausführungsform der Erfindung, bei der, über die schon beschriebenen Merkmale und Maßnahmen hinausgehend die Absperrklappe 4 eine kegelförmige Dichtfläche 6 aufweist, wobei jedoch in dem die Dichtfläche 6 tragenden Rand der Absperrklappe 4 eine Vorspannut 13 angeordnet ist und in diese mit Vorspannung ein Wellfederdichtungsring 14 eingesetzt. Der Absperrklappensitz 7 weist eine der Dichtfläche 6 komplementäre Gegendichtfläche 8 auf, die als federnder Hohlkegelring 9 ausgeführt ist. Im Bereich ihres größten Durchmessers ist sie mittelbar oder unmittelbar an das Gehäuse 3 angeschlossen. Die Anordnung ist so getroffen, daß bei geschlossener Absperrklappe 4 der Wellfederdichtungsring 14 unter dem Einfluß der Dichtkraft den Hohlkegelring 9 federnd verformt und selbst eine elastische Verformung erfährt. Im Ausführungsbeispiel und nach bevorzugter Ausführungsform der Erfindung besteht der Wellfederdichtungsring 14 aus einer Mehrzahl von ebenen metallischen Ringscheiben 15, zwischen den metallischen Ringscheiben 15 angeordneten Wellringscheiben 16 mit umlaufenden Wellenbergen und Wellentälern und Zwischenlagen 17 aus einem Weichdichtungswerkstoff. Der Wellfederdichtungsring 14 wirkt federnd, Metall auf Metall, mit seiner über der Dichtfläche vorstehenden Paßfläche gegen die Gegendichtfläche 8. Im Ausführungsbeispiel besteht die Vorspannut 13 aus einer Auskammerung 18 in der Absperrklappe 4 und einem Vorspannring 19, der mit über den Umfang verteilten Vorspannschrauben 20 spannbar und bei Verschleiß nachstellbar ist. Der Wellfederdichtungsring 14 besteht im Ausführungsbeispiel aus zwei metallischen Ringscheiben 15 und zumindest zwei Wellringscheiben 16, zwischen denen der Weichdichtungswerkstoff in Form der Zwischenlagen 17 angeordnet ist. Eine Schicht 21 aus dem Weichdichtungswerkstoff ist außerdem zu einer Anlagefläche der Vorspannut 13 hin vorgesehen. Als Weichdichtungswerkstoff ist Graphit eingesetzt. Die Ringscheiben 15 und die Wellringscheiben 16 bestehen aus Edelstahl. Die Dicke des Bleches, aus dem die Ringschreiben 15 und die Wellringscheiben 16 geformt sind, mögen eine Dicke von etwa 0,5 mm aufweisen.

Die Tatsache, daß mit einem verhältnismäßig dünnwandigen Hohlkegelring 9 gearbeitet wird, hat einen besonderen Vorteil. Die Wärmedehnung, die die Absperrklappe 4 erfährt, erfährt praktisch gleichzeitig auch der Hohlkegelring 9, der außerdem federnd verformbar ist. Die Absperrklappe 4 kann daher jederzeit leicht geöffnet und geschlossen werden.

## Patentansprüche

1. Absperrarmatur mit
einem einen Strömungskanal (2) bildenden Gehäuse (3),
einer Absperrklappe (4) mit umfangsseitiger, kegelförmiger Dichtfläche (6),
einer quer zum Strömungskanal (2) verlaufenden Absperrklappenwelle (5), die in bezug auf die Absperrklappe (4) exzentrisch mit einem axialen Versatz zur umfangsseitigen Dichtfläche (6) und mit einem radialen Versatz zur Mittelachse des Strömungskanals angeordnet ist, und
einem Wellfederdichtungsring (14), der unter axialer Vorspannung in eine Vorspannut (13) eingesetzt ist,
wobei die Vorspannut (13) in dem die Dichtfläche (6) tragenden Rand der Absperrklappe (4) angeordnet ist und wobei der Wellfederdichtungsring (14) bei geschlossener Absperrklappe federnd, Metall auf Metall, mit seiner über der Dichtfläche (6) vorstehenden Paßfläche gegen eine zur Dichtfläche (6) komplementären Gegendichtfläche (8) des Absperrklappensitzes (7) wirkt, **dadurch gekennzeichnet**, daß der Absperrklappensitz (7) aus einem Hohlkegelring (9) besteht, der eine Wanddicke von einigen Millimetern aufweist, und daß der Hohlkegelring (9) im Bereich seines größten Durchmessers mittelbar oder unmittelbar an das Gehäuse (3) angeschlossen und an seinem anderen Ende mit einem Ringspaltabstand zum Gehäuse (3) angeordnet ist, so daß die Wärmedehnung des Hohlkegelrings (9) im wesentlichen der Wärmedehnung der Absperrklappe (4) entspricht. wenn bei relativ zur Absperrklappe (4) kaltem Gehäuse (3) an der Absperrklappe (4) warmes Medium ansteht.

2. Absperrarmatur nach Anspruch 1, dadurch gekennzeichnet, daß der Hohlkegelring (9) an einen Haltering (10) angeschlossen ist, der in eine Aufnahmenut (11) des Gehäuses eingesetzt ist.

3. Absperrarmatur nach Anspruch 1 oder 2, dadurch gekennzeichnet, daß der Wellfederdichtungsring (14) aus einer Mehrzahl von ebenen metallischen Ringscheiben (15), zwischen den Ringscheiben (15) angeordneten metallischen Wellringscheiben (16) mit umlaufenden Wellenbergen und Wellentälern und Zwischenlagen (17) aus einem Weichdichtungswerkstoff besteht.

4. Absperrarmatur nach Anspruch 3, dadurch gekennzeichnet, daß als Weichdichtungswerkstoff Graphit eingesetzt ist.

5. Absperrarmatur nach Anspruch 3 oder 4, dadurch gekennzeichnet, daß die Ringscheiben (15) und die Wellringscheiben (16) aus Edelstahl bestehen und eine Dicke von etwa 0,5 mm aufweisen.

## Claims

1. A shut-off device, comprising
a housing (3) forming a flow channel (2),
a shut-off flap (4) having a peripheral, tapered sealing face (6),
a shut-off flap spindle (5) which extends transversely in relation to the flow channel (2) and which is disposed eccentrically in relation to the shut-off flap (4), having an axial offset in relation to the peripheral sealing face (6) and having a radial offset in relation to the centre line of the flow channel, and
a corrugated spring sealing ring (14) which is inserted in a prestressing groove (13) under an axial prestress,
wherein the prestressing groove (13) is disposed in the edge of the shut-off flap (4) which bears the sealing face (6) and wherein when the shut-off flap is closed the corrugated spring sealing ring (14) acts resiliently, metal on metal, with its seat-engaging surface which projects beyond the sealing face (6) against an opposing sealing face (8), which is complementary to the sealing face (6), of the shut-off flap seat (7), characterised in that the shut-off flap seat (7) consists of a hollow tapered ring (9) which has a wall thickness of a few millimetres, and that the hollow tapered ring (9) is directly or indirectly attached in the region of its maximum diameter to the housing (3) and its other end is disposed with an annular gap spacing from the housing (3). so that the thermal expansion of the hollow tapered ring (9) substantially corresponds to the thermal expansion of the shut-off flap (4) when a hot medium acts on the shut-off flap (4) and the housing (3) is cold in relation to the shut-off flap (4).

2. A shut-off device according to claim 1, characterised in that the hollow tapered ring (9) is attached to a retaining ring (10) which is inserted in a receiving groove (11) in the housing (3).

3. A shut-off device according to claims 1 or 2, characterised in that the corrugated spring sealing ring (14) consists of a multiplicity of flat, metal annular discs (15), of metal corrugated annular discs (16) which have encircling corrugation peaks and corrugation troughs and which are disposed between the annular discs (15), and of intermediate layers (17) made of a soft sealing material.

4. A shut-off device according to claim 3, characterised in that graphite is used as the soft sealing material.

5. A sealing device according to claims 3 or 4, characterised in that the annular discs (15) and the corrugated annular discs (16) consist of stainless steel and have a thickness of about 0.5 mm.

## Revendications

1. Robinet d'arrêt comprenant
un boîtier (3) formant un canal d'écoulement (2),
un clapet d'arrêt (4) pourvu d'une surface d'étanchéité périphérique conique (6),
un arbre de clapet d'arrêt (5) qui s'étend transversalement au canal d'écoulement (2) et qui, par rapport au clapet d'arrêt (4), est disposé de manière excentrée avec un déport axial par rapport à la surface d'étanchéité périphérique (6) et avec un déport radial par rapport à l'axe médian du canal d'écoulement, et
un anneau d'étanchéité à ressort ondulé (14) qui est logé sous une précontrainte axiale dans une gorge de précontrainte (13),
la gorge de précontrainte (13) se trouvant dans le bord du clapet d'arrêt (4) pourvu de la surface d'étanchéité (6), et, à clapet d'arrêt fermé, l'anneau d'étanchéité à ressort ondulé (14) agissant métal sur métal, avec sa face de contact dépassant de la surface d'étanchéité (6), contre une surface d'étanchéité antagoniste (8), complémentaire de la surface d'étanchéité (6), du siège de clapet d'arrêt (7), caractérisé en ce que le siège de clapet d'arrêt (7) est constitué d'un anneau conique creux (9) qui possède une épaisseur de paroi de quelques millimètres, et en ce que, dans la zone de son plus grand diamètre, l'anneau conique creux (9) est relié indirectement ou directement au boîtier (3) et, à son autre extrémité, présente un écartement annulaire par rapport au boîtier (3), de façon que la dilatation thermique de l'anneau conique creux (9) corresponde sensiblement à la dilatation thermique du clapet d'arrêt (4) en présence d'un produit chaud au niveau du clapet d'arrêt (4) lorsque le boîtier (3) est froid par rapport: au clapet d'arrêt (4).

2. Robinet d'arrêt selon la revendication 1, caractérisé en ce que l'anneau conique creux (9) est relié à un anneau de retenue (10) qui est logé dans une gorge réceptrice (11) du boîtier.

3. Robinet d'arrêt selon la revendication 1 ou 2, caractérisé en ce que l'anneau d'étanchéité à ressort ondulé (14) se compose d'une pluralité de rondelles métalliques planes (15), de rondelles métalliques ondulées (16) disposées entre les rondelles (15) et pourvues en périphérie de sommets et de creux, et de couches intermédiaires (17) en matériau d'étanchéité mou.

4. Robinet d'arrêt selon la revendication 3, caractérisé en ce que le matériau d'étanchéité mou utilisé est du graphite.

5. Robinet d'arrêt selon la revendication 3 ou 4, caractérisé en ce que les rondelles (15) et les rondelles ondulées (16) sont en acier fin et présentent une épaisseur d'environ 0,5 mm.
